# EUROPEAN PATENT APPLICATION

(11) **EP 2 570 348 A1**
(43) Date of publication of application: **20.03.2013**
(21) Application number: 11425237.2
(22) Date of filing: 19.09.2011
(51) Int. Cl.: B64D 25/12, B64C 27/00

(54) **Support unit to connect a ballistic parachute to a helicopter**

(71) Applicant: Marega Piergiovanni, Torino (IT)
(72) Inventor: Marega Piergiovanni, Torino (IT)
(74) Representative: Lovino, Paolo

(57) **Abstract**

A ballistic parachute (11) is carried by a support unit (12), which has a tube (13) with an intermediate portion (19) arranged coaxially inside the rotor shaft of a helicopter (2); the tube (13) is secured at its lower end to a fixed structure (15) of the helicopter (1) and, at its upper end (25), supports a plate defining a lower base for the parachute (11); the parachute (11) is enclosed above by a dome (28), which can be removed by activating an ejection system via a control cable (45) that passes axially through the tube (13); the cables of the parachute (11) are connected to a fastening body (35), which is fitted on the upper end (25) of the tube (13), is arranged above the plate (27) and can axially rotate with respect to the tube (13).

## Description

The present invention relates to a support unit to connect a ballistic parachute to a helicopter.

As is known, a ballistic parachute is a device that is installed on aircraft and is opened when control of the aircraft is lost and it is necessary to make an emergency landing. Normally, the ballistic parachute is used on ultralight aeroplanes, but there is an increasingly felt need to also install it on helicopters.

On helicopters, the parachute is covered by a dome, which can be forcibly ejected, for example by means of a rocket or a compressed air system controlled by the pilot. Patent US6199799, which corresponds to the preamble of claim 1, describes a helicopter having a parachute arranged on a plate at the top of the main rotor shaft. This plate is fixed to the top end of a tube, which is coaxial to and inside the main rotor shaft and is fixed at its lower end to the transmission housing of the helicopter. This tube defines a passage for a control cable, which is operated by the pilot to activate a rocket and thus eject the dome that covers the parachute. An anchor line, connecting the parachute cables to a bracket that is also fixed to the transmission housing, also passes through the tube.

The solution just described is unsatisfactory because of the anchor line provided to secure the parachute cables. In fact, if a transmission malfunction occurs during an emergency and the helicopter goes into autorotation around the axis of the main rotor, after the dome is removed, despite the flexibility of the anchor line, the parachute turns together with the helicopter right at the moment when it is opening. Due to this rotation, the cables tend to twist, thereby preventing the parachute from opening.

Furthermore, the anchor line must be sized in a manner such that it can support the entire weight of the helicopter when the parachute is open, which is why it must have a relatively broad cross-section. Therefore, the tube housing the anchor line must have an adequately wide internal diameter, and so it cannot be installed on helicopters with a small-diameter rotor shaft.

The object of the present invention is that of making a support unit to connect a ballistic parachute to a helicopter, which enables the above-described problems to be resolved in a simple and inexpensive manner.

According to the present invention, a support unit to connect a ballistic parachute to a helicopter is made as defined in claim 1.

For a better understanding of the present invention, a preferred embodiment shall now be described, purely by way of a non-limitative example, with reference to the attached drawings, where:
- Figure 1 partially shows a helicopter equipped with a preferred embodiment of the support unit to connect a ballistic parachute according to the present invention; and
- Figure 2 is a cross-section along a vertical section plane that schematically shows the support unit of Figure 1.

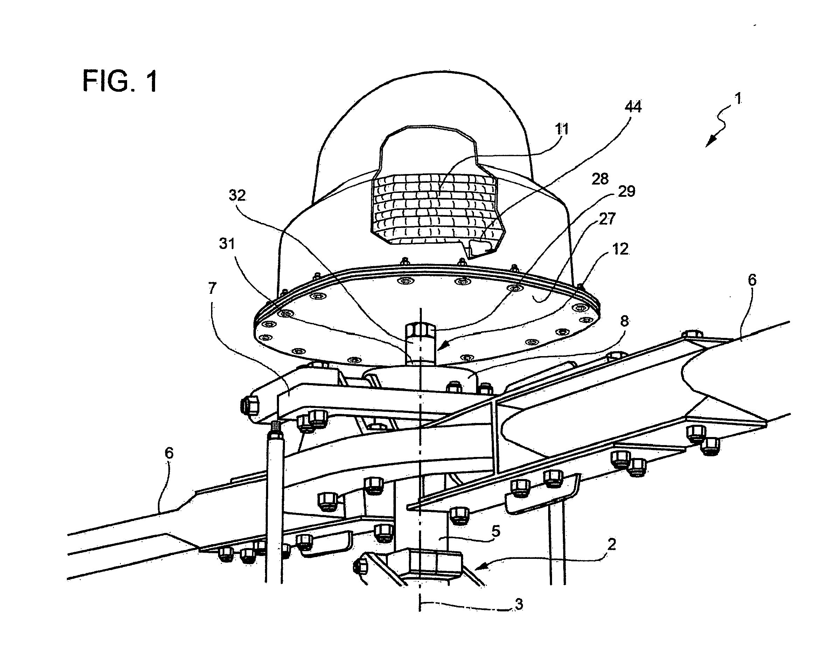

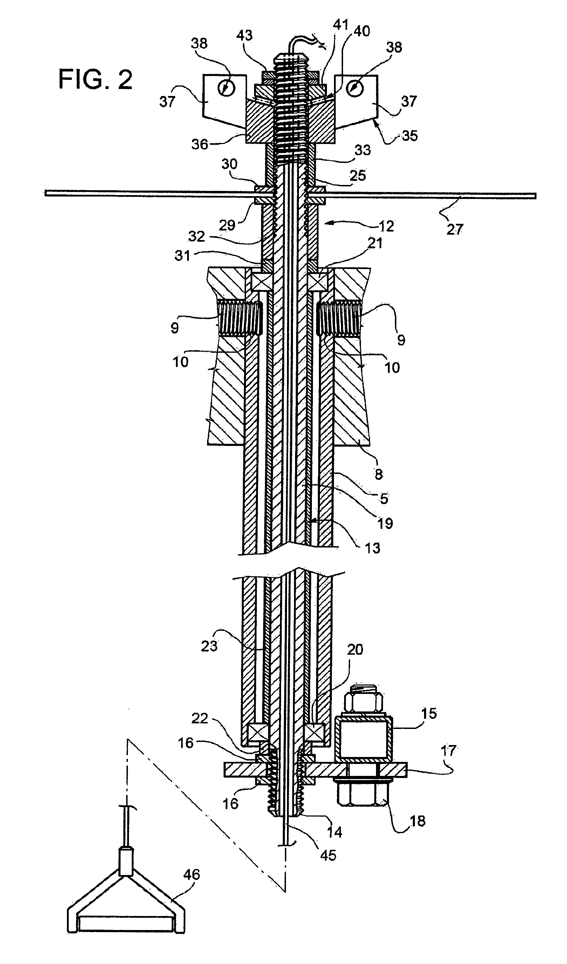

In Figure 1, reference numeral 1 indicates, as a whole, a helicopter (partially shown) comprising a rotor 2 (partially shown) having a vertical axis of rotation 3. The rotor 2 comprises an axially hollow shaft 5, driven in rotation by an engine (not shown) through a transmission (not shown). The rotor 2 also comprises two blades 6, which are connected by means of a fastening and adjustment device 7 to a cylindrical support body 8 fitted on the shaft 5. In particular, as can be seen in Figure 2, the body 8 is fixed to the shaft 5 by two radial pins 9 (partially shown), which are coaxial and diametrically opposite, and have respective threaded ends 10 screwed into respective radial holes of the shaft 5.

Still with reference to Figure 1, a ballistic parachute 11, or emergency parachute, is arranged above the shaft 5 and is connected to the helicopter 1 by means of a support unit 12. As shown in Figure 2, the support unit 12 comprises a tube 13, coaxial with the shaft 5 and, in turn, comprising a lower end portion 14 that projects below the shaft 5 and is secured to a fixed structure 15 (partially shown) of the helicopter 1. In particular, portion 14 is threaded on the outside and passes through a plate or bracket 17, which is orthogonal to axis 3, is clamped in a fixed axial position between two ring nuts or nuts 16 screwed onto portion 14 (possibly with the use of washers or other locking systems not shown) and is secured to the structure 15 by means of one or more bolts 18.

The tube 13 also comprises an intermediate portion 19, which is housed in the shaft 5 and is coupled to the inner surface of the shaft 5 by means of two bearings 20 and 21 (shown schematically). In particular, on one side, the inner ring of bearing 20 is resting against a spacer 22 positioned on one of the ring nuts 16 and, on the other side, against a sleeve 23, which is fitted on portion 19, remaining radially separated from the ends 10 and the inner surface of the tube 13 and, in turn, is axially resting against the inner ring of bearing 21.

The tube 13 comprises an upper end portion 25, which projects above the tube 13, is threaded on the outside and supports a plate 27. The plate 27 is orthogonal to axis 3 and defines a lower base or support for the parachute 11, which remains closed from above by a dome 28 (partially shown in Figure 1) coupled to the plate 27 in a fixed position, for example, by means of releasable or frangible retaining devices.

Plate 27 is clamped in a fixed axial position between two ring nuts or nuts 29 and 30 screwed onto portion 25. Preferably, washers or other locking systems are provided to prevent the ring nuts 29 and 30 from becoming loose. Ring nut 29 is positioned below, and also has the function of axially holding the inner rings of bearings 20 and 21 in place, through the insertion of two spacers 31 and 32, one on top of the other. Spacer 31 is defined by a metal bushing, exactly like spacer 22, and rests against the inner ring of bearing 21. Spacer 32 is instead defined by a bushing made of a plastic material, arranged between spacer 31 and ring nut 29. A spacer 33 defined by another bushing is provided on ring nut 30. Spacer 33 is also made of a plastic material, preferably PTFE, as will be better explained in the following.

The support unit 12 also comprises a fastening body 35, which is fitted on portion 25 and arranged in axial contact against spacer 33.

The fastening body 35 supports the cables (not shown) of the parachute 11. In particular, the fastening body 35 comprises an axially bored centre portion 36, through which portion 25 passes, and a plurality of arms 37 (four for example), which radially extend from portion 36 and have respective holes 38 defining the anchorage points for said cables. The upper surface of portion 36 directly defines the lower rolling race of a thrust bearing 40, in particular a bearing of the type with conical rollers. The upper rolling race of the thrust bearing 40 is defined by a ring 41, which is clamped in a fixed axial position against the rolling bodies of the thrust bearing 40, i.e. against the fastening body 35, by a ring nut or nut 43 screwed onto the upper end of portion 25. A washer or other locking system is conveniently provided to prevent ring nut 43 from becoming loose.

Thanks to the thrust bearing 40, the fastening body 35 can axially rotate with respect to the tube 13. It is not necessary to provide another thrust bearing beneath the fastening body 35, as the friction against spacer 33 during possible relative rotation of the fastening body 35 is negligible when the parachute 11 is open: in fact, the weight of the helicopter 1 is discharged above the fastening body 35, through ring nut 43 and the thrust bearing 40 and, below, the PTFE of spacer 33 contributes to reduce friction.

The dome 28 also houses an ejection system 44 (shown schematically in Figure 1), for example of the rocket type, which can be activated by the pilot of the helicopter 1 by operating a control cable 45 (partially shown in Figure 2). The control cable 45 passes axially inside the tube 13 with the upper end being connected to the ejection system 44 in a manner not shown and the lower end being connected to a handle 46 arranged inside the cockpit and suitable for being operated by the pilot. When activated, the ejection system 44 breaks the dome 28, or releases it from the plate 27, so as to move it away from the plate 27: the parachute 11 consequently has the possibility of opening, as it is no longer covered by the dome 28.

The control cable 45 is pulled by means of the handle 46 when the helicopter 1 is out of control and an emergency landing is necessary. Once the dome 28 is removed, the parachute 11 opens automatically and the weight of the helicopter 1 is taken up by the cables of the parachute 11 through the bracket 17, the tube 13, ring nut 43, the thrust bearing 40 and the arms 37 of the fastening body 35.

If the helicopter 1 goes into autorotation during the descent with the parachute 11 open, for example, due to failure of the transmission that drives the rotor 2, the thrust bearing 40 angularly uncouples the fastening body 35 and the parachute 11 from the tube 13. Thus, while the tube 13 turns around axis 3 together with the rest of the helicopter 1, the arms 37 of the fastening body 35 do not follow this rotation, but can remain angularly stationary. In consequence, the cables of the parachute 11 do not twist during the opening of the parachute 11 and the emergency descent of the helicopter 1.

It is therefore evident how the support unit 12 gives a high guarantee of functional effectiveness for the parachute 11. In addition, the tube 13 not only performs the function of housing the control cable 45, but also the function of a tie rod to support the helicopter 1 during descent with the parachute 11 open. In this way, other additional cables or tie rods are unnecessary and the tube 13 can be made with a relatively small outer diameter, so that it can be installed with radial clearance in a small-sized rotor shaft.

The plastic material of spacers 32 and 33 has greater elasticity than the other metal components and can be axially compressed by the tightening of ring nuts 29 and 43, to contribute to a locking action on the same ring nuts 29 and 43.

Furthermore, the support unit 12 is relatively simple to install even on helicopters already in production. In fact, on such helicopters it is only necessary to alter the connection system of the body 8 to the shaft 5 in order to free the inner axial cavity of the shaft 5, so as to then insert the tube 13 of the support unit 12.

Finally, the support unit 12 is relatively compact, also in the axial direction, and has a relatively small number of components, also thanks to the fact that the thrust bearing 40 exploits the fastening body 35 as the lower race for its rolling bodies.

Finally, it is understood that changes and modifications may be made to the support unit 12 described and shown herein without leaving the scope of protection of the present invention, as defined in the appended claims.

In particular, the fastening body 35 could have a different shape from that shown and could be coupled in an axially rotating manner to portion 25 of the tube 13 by thrust bearings that are different from those preferably indicated above by way of example. In addition, the method of fixing the plate 27 to the tube 13 could be different from that indicated: for example, just one of the ring nuts 29 and 30 could be provided.

## Claims

1. A support unit (12) for connecting a ballistic parachute (11) to a helicopter (1), the helicopter comprising a rotor (2) having an axially hollow rotor shaft (5) and the support unit comprising:
- a tube (13) extending along an axis (3) and comprising an intermediate portion (19), suitable for being axially housed within said rotor shaft (5), a lower end portion (14), and an upper end portion (25);
- bearing means (20, 21) coupled to said intermediate portion (19) and suitable for being coupled to an inner surface of said rotor shaft (5);
- first fastening means (17) fixed to said lower end portion (14) and suitable for being secured to a fixed structure (15) of said helicopter (1);
- second fastening means (35) suitable for being fixed to a plurality of cables of said parachute (11);
- a plate (27) fixed to said upper end portion (25) and defining a lower base for said parachute (11);
- a dome (28), which is coupled to said plate (27) and encloses said parachute (11) from above;
- ejection means (44) that can be operated to remove said dome (28) from said parachute (11); and
- a control cable (45), which passes axially in said tube (13) and can be pulled to activate said ejection means (44); **characterized in that** said second fastening means (35) comprise a fastening body (35), which is fitted on said upper end portion (25), is arranged above said plate (27) and can axially rotate with respect to said upper end portion (25).

2. The support unit according to claim 1, **characterized by** comprising at least one thrust bearing (40) between said fastening body (35) and said upper end portion (25).

3. The support unit according to claim 2, **characterized by** comprising a single thrust bearing (40) arranged above said fastening body (35).

4. The support unit according to claim 2 or 3, **characterized in that** said thrust bearing (40) comprises a rolling race integrally made on said fastening body (35).

5. The support unit according to any of claims 2 to 4, **characterized by** comprising a spacer (33), which is fitted on said upper end portion (25), is arranged axially beneath said fastening body (35) and is made of a plastic material.

6. The support unit according to claim 5, **characterized in that** said spacer is made of PTFE and is inserted between said fastening body (35) and said plate (27).

7. The support unit according to claim 5 or 6, **characterized by** comprising a ring nut, which is screwed onto said upper end portion (25) to axially clamp said thrust bearing (40) and said fastening body (35) onto said spacer (33).

8. A helicopter rotor assembly, comprising:
- a rotor (2) comprising a rotor shaft (5); and
- a support unit (12) made according to any of the preceding claims.

9. The rotor assembly according to claim 8, **characterized in that** said rotor (2) comprises a support body (8), which is fitted on said rotor shaft (5) and is secured to said rotor shaft (5) by two radial pins (9); said radial pins (9) being coaxial and diametrically opposite, and having respective threaded ends (10) screwed into said rotor shaft (5).
